# EUROPÄISCHE PATENTSCHRIFT

(11) **EP 1 260 804 B1**
(45) Veröffentlichungstag und Bekanntmachung des Hinweises auf die Patenterteilung: **16.09.2009**
(21) Anmeldenummer: 01112459.1
(22) Anmeldetag: 22.05.2001
(51) Int. Cl.: G01K 3/06

(54) **Mittelwertbildende Einrichtung zum Messen einer Temperatur**
Averaging device for measuring a temperature
Dispositif pour former une moyenne pour la mesure d'une température

(43) Veröffentlichungstag der Anmeldung: 27.11.2002
(73) Patentinhaber: SIEMENS AKTIENGESELLSCHAFT, 80333 München (DE)
(72) Erfinder: Radatti, Giuseppe, 8634 Hombrechtikon (CH); Meisinger, Rolf, 8800 Thalwil (CH)

(56) Entgegenhaltungen:
- WO-A-88/05160
- WO-A-92/03833
- DE-A- 19 625 723
- DE-A- 19 904 419
- US-A- 2 573 686
- US-A- 3 704 705

## Beschreibung

Die Erfindung bezieht sich auf Einrichtung der im Oberbegriff des Anspruchs 1 genannten Art.

Solche Einrichtungen eignen sich beispielsweise zur Messung einer mittleren Temperatur in einem Luftkanal in der Heizungs-, Lüftungs- und Klimatechnik (HLK), sie sind jedoch allgemein zur Erfassung einer für einen gewissen Raum gemittelten Temperatur in einem Fluid einsetzbar.

Es ist eine Einrichtung dieser Art bekannt (WO 8805160), bei der ein Draht mit temperaturabhängigem elektrischem Widerstand über den Bereich eines Raumes angeordnet wird, dessen mittlere Raumtemperatur zu erfassen ist. Derartige Messeinrichtungen haben den Nachteil, dass ihre Geometrie schon bei der Fertigung der Geometrie des Raumes anzupassen ist, dessen mittlere Raumtemperatur zu erfassen ist. Für den Einsatz in beliebigen Luftkanälen beispielsweise hat dies den Nachteil, dass für eine Vielzahl von Kanalquerschnitten jeweils eine an den Kanalquerschnitt angepasste Fühlerform herzustellen und abzugleichen ist, was einer kostengünstigen Fertigung einer vielseitig einsetzbaren Messeinrichtung entgegensteht.

Es ist ferner ein mittelwertbildender Kanaltemperaturfühler mit der Bezeichnung QAM22... bekannt (Datenblatt der Firma Siemens Building Technologies, CM1N1771D, Februar 1999), bei dem ein Nickeldraht elektrisch isoliert um eine biegsame Trägerrute gewickelt ist.

Es ist auch bekannt (WO 9203833), ein Material, welches einen temperaturabhängigen elektrischen Widerstand aufweist, im Dünnschichtverfahren auf ein biegsames Polymer-Substrat aufzutragen. Auf diese Art können mittelwertbildende Temperaturfühler gefertigt werden, welche durch entsprechendes Biegen in gewissen Grenzen an eine Raumgeometrie anpassbar sind.

Ein überzogenes Biegen eines temperaturabhängigen Fühlermaterials jedoch kann Veränderungen oder sogar Schäden in dessen Struktur erzeugen, welche mindestens einen Neuabgleich der Messeinrichtung, wenn nicht sogar deren Auswechslung bedingen.

Der Erfindung liegt die Aufgabe zugrunde, eine mittelwertbildende Einrichtung zur Erfassung einer Temperatur in einem Raum vorzuschlagen, welche vor Ort in gewissen Grenzen an die Geometrie des Raumes anpassbar ist.

Die genannte Aufgabe wird erfindungsgemäss durch die Merkmale des Anspruchs 1 gelöst. Vorteilhafte Ausgestaltungen ergeben sich aus den abhängigen Ansprüchen.

Es zeigen:
- Fig. 1: eine in einem Kanal angeordnete Einrichtung mit einer Trägerrute und einem Fühlerelement zum Messen einer Temperatur,
- Fig. 2: eine Detailansicht der Einrichtung mit der Trägerrute und dem Fühlerelement,
- Fig. 3: eine Hülse für das Fühlerelement,
- Fig. 4: eine Variante der Einrichtung mit direkt auf der Trägerrute befestigtem Fühlerelement, und
- Fig. 5: eine weitere Variante der Einrichtung mit mehreren Fühlerelementen.

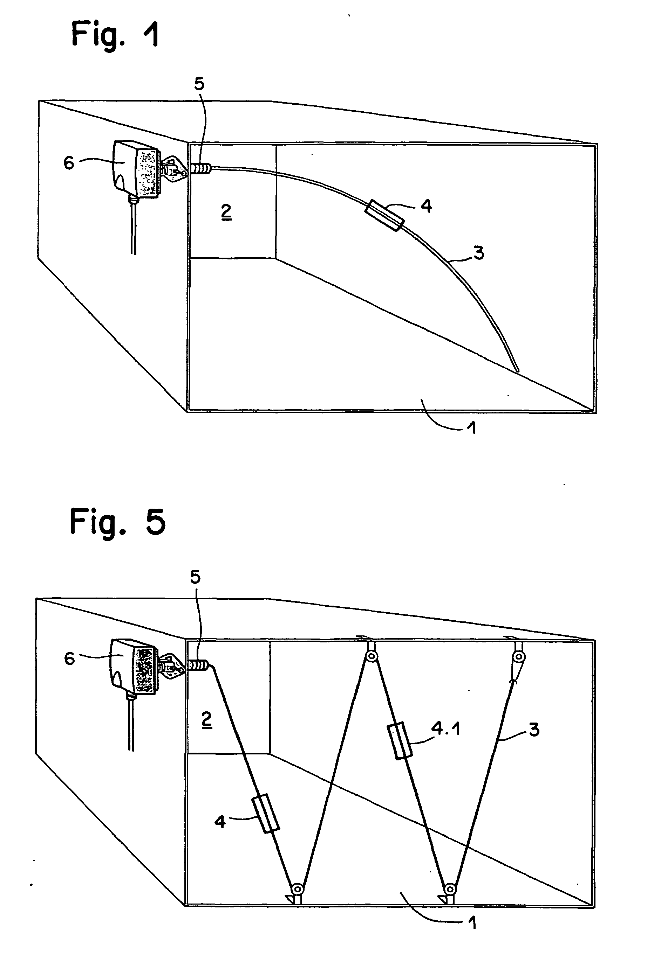

In der Fig. 1 bedeutet 1 einen von einem Fluid durchströmten Kanal, an den eine mittelwertbildende Einrichtung 2 zum Messen der Temperatur des Fluids angeordnet ist. Die mittelwertbildende Einrichtung 2 weist eine biegbare Trägerrute 3 aus einem gut wärmeleitenden Material und ein mit der Trägerrute 3 thermisch gut gekoppeltes Fühlerelement 4 auf.

Unter gut wärmeleitendem Material wird hier ein Werkstoff verstanden, dessen Wärmeleitfähigkeit mindestens 15 Wm⁻¹K⁻¹ (Watt pro Meter und Kelvin) beträgt. Mit Vorteil weist der Werkstoff der Trägerrute 3 jedoch eine Wärmeleitfähigkeit von mehr als 50 Wm⁻¹K⁻¹ (Watt pro Meter und Kelvin) auf.

Das Fühlerelement 4 ist mit Vorteil ein temperaturabhängiger elektrischer Schicht- oder Massewiderstand. Beispielhaft ist das Fühlerelement 4 ein in einem bekannten Dünnschichtverfahren hergestellter und im Handel angebotener Schichtwiderstand mit einem Nennwert von 1000 Ohm oder 100 Ohm. Grundsätzlich sind Material und Aufbau und damit die elektrischen Eigenschaften und deren spezifische Temperaturabhängigkeit des Fühlerelements in bekannter Art an ein zu messendes Temperaturintervall und an eine zu erwartete Fehlertoleranz anzupassen.

Mit Vorteil ist die Trägerrute 3 über einen Montageflansch 5 am Kanal 1 befestigt. Die mittelwertbildende Einrichtung 2 wird vorteilhafterweise über eine Anschlussdose 6 elektrisch an ein übergeordnetes System, beispielhaft an ein Regelgerät oder an ein Gebäudeleitsystem angeschlossen.

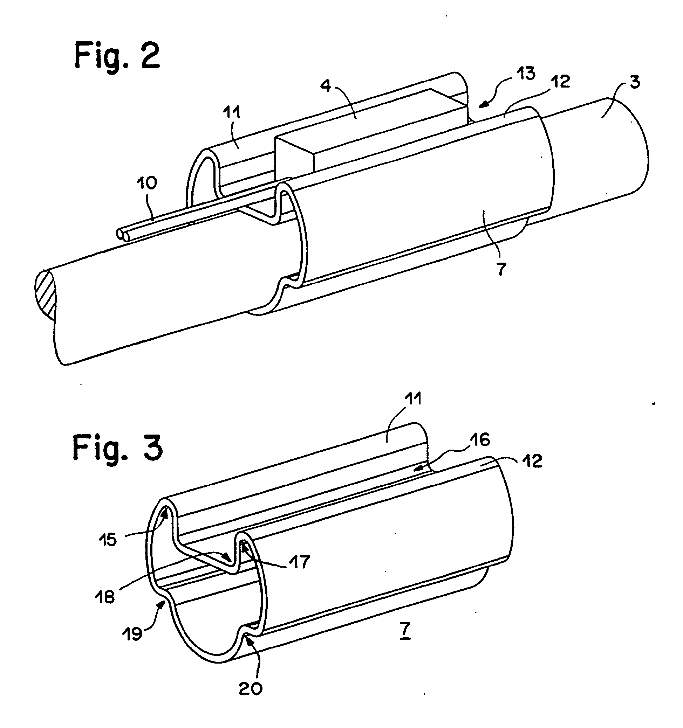

Erfindungsgemäss wird das Fühlerelement 4 über eine Hülse 7 (Fig. 2) aus einem gut wärmeleitenden Material derart an der Trägerrute 3 befestigt, dass zwischen dem Fühlerelement 4 und der Trägerrute 3 eine gute thermische Koppelung erreicht wird.

Elektrische Anschlussleitungen 10 des Fühlerelements 4 sind mit Vorteil mit der Anschlussdose 6 verbunden.

Mit Vorteil weist die Hülse 7 eine zwischen Wänden 11 und 12 ausgebildete Nut 13 auf, in welcher das Fühlerelement 4 mechanisch geschützt auf der Hülse 7 angeordnet ist.

Durch die auf der biegsamen Trägerrute 3 angeordnete, in ihrer Längsachse steife Hülse 7, ist das auf der Hülse 7 angeordnete Fühlerelement 4 wirksam vor Beschädigungen durch Biegespannung geschützt, wenn die Trägerrute 3 beispielsweise durch Biegen funktionsgerecht im Kanal 1 ausgerichtet wird.

Eine gute Steifigkeit der Hülse 7 und damit ein guter Schutz gegen Biegespannungen im Fühlerelement 4 ist insbesondere erreichbar, wenn die Steifigkeit der Hülse 7 durch parallel zur Längsachse ausgebildete Kanten 15, 16, 17, 18, 19 und 20 (Fig. 3) erhöht wird.

Beispielhaft wird die Hülse 7 durch eine Klemmverbindung an der Trägerrute 3 befestigt.

Bei Bedarf werden das Fühlerelement 4 und die Hülse 7 mit einem Schmelzschlauch, Lack- oder Schutzkleber abgedeckt, wodurch in vorteilhafter Weise die Anschlussleitungen 10 des Fühlerelements durch den Schmelzschlauch vor allfällig auftretenden Zugkräften entlastbar sind.

Durch die gute Wärmeleitfähigkeit der Trägerrute 3 weist die Trägerrute 3 eine Temperatur auf, welche einer gemittelten Temperatur eines Raumbereiches entspricht, der von der Trägerrute 3 durchdrungen wird. Die gut wärmeleitende Trägerrute 3 stellt also ein einfaches und robustes Element zur Mittelwertbildung für unterschiedliche Temperaturen in einen Raumbereich dar. Durch entsprechendes Biegen ist die Trägerrute 3 für eine optimale Temperaturerfassung in weiten Grenzen auf verschiedene Geometrien anpassbar.

Bei Bedarf wird die Trägerrute 3 bereits beim Herstellen der mittelwertbildenden Einrichtung 2 spiral- oder schraubenlinienförmig vorgebogen.

Gute Mittelwertbildung und Biegsamkeit ist insbesondere bei der Trägerrute 3 aus einem Metall, vorzugsweise aus Kupfer oder einer Aluminiumlegierung erreichbar. Bei der Ausgestaltung der Trägerrute 3 und der Hülse 7 ist selbstverständlich darauf zu achten, dass die Wärmeübertragung von der Trägerrute 3 über die Hülse 7 auf das Fühlerelement 4 optimal ist, so dass das Fühlerelement 4 im Wesentlichen die mittels der Trägerrute 3 gemittelte Temperatur des von der Trägerrute 3 durchdrungenen Raumbereichs entspricht.

In einem Ausführungsbeispiel, in welchem das Fühlerelement 4 ein in einem Dünnschichtverfahren hergestellter Sensor ist, wird beispielsweise ein auch rückseitig metallisiertes Substrat des Fühlerelements 4 direkt auf die Hülse 7 gelötet, oder das Substrat wird mit einem wärmeleitenden Kleber an der Hülse 7 befestigt.

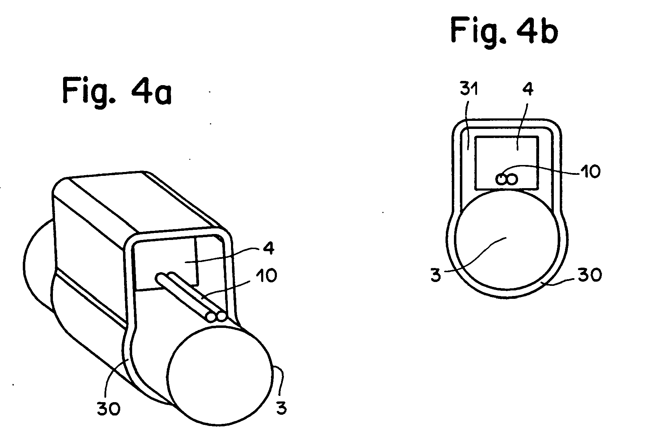

Fig. 4a und 4b zeigen zwei Ansichten einer Variante der Einrichtung, in der das Fühlerelement 4 mit der Trägerrute 3 thermisch gut gekoppelt auf der Trägerrute 3 angeordnet und befestigt ist. An der Trägerrute 3 ist im Bereich des Fühlerelements 4 ein Versteifungselement 30 angeordnet. Durch das auf der biegsamen Trägerrute 3 angeordnete, in seiner Längsachse steife Versteifungselement 30, ist das Fühlerelement 4 wirksam vor Beschädigungen durch Biegespannung geschützt, wenn die Trägerrute 3 beispielsweise durch Biegen funktionsgerecht im Kanal 1 ausgerichtet wird.

Mit Vorteil ist das Versteifungselement 30 derart ausgestaltet, dass das Fühlerelement 4 und die Trägerrute 3 vom Versteifungselement 30 umwunden sind, so dass das Fühlerelement 4 durch das Versteifungselement 30 auch vor äusseren Beschädigungen geschützt ist. Mit Vorteil wird das Versteifungselement 30 auch derart ausgestaltet, das Versteifungselement 30 nicht am Fühlerelement 4 anliegt, sondern dass zwischen dem Fühlerelement 4 und dem Versteifungselement 30 ein Hohlraum 31 entsteht.

Beispielhaft ist das Versteifungselement 30 formschlüssig an der Trägerrute 3 aufgepresst.

Trotz guter Wärmeleitfähigkeit der Trägerrute 3 vermag diese bei grösseren Raumbereichen, also etwa bei Raumdurchmessern über einem Meter, lokale Temperaturunterschiede je nach Anforderung nur noch ungenügend auszumitteln. In einer in der Fig. 5 dargestellten Variante der Einrichtung weist die Trägerrute 3 das Fühlerelement 4 und ein weiteres, in gleicher Art auf der Trägerrute 3 angeordnetes und mit Vorteil gleich aufgebautes Fühlerelement 4.1 auf. Die beiden Fühlerelemente 4 und 4.1 werden mit Vorteil über ihre Anschlussleitungen 10 elektrisch in Reihe geschaltet auf die Anschlussdose 6 geführt.

Durch das Anordnen mehrerer zusammengeschalteter Fühlerelemente 4 bzw. 4.1 auf der Trägerrute 3 ist eine verbesserte Mittelwertbildung über eine grösseren Raumbereich, oder gleichbedeutend über mehrere Teil-Raumbereiche möglich, wobei ein entsprechender Teil der Trägerrute 3 und ein auf diesem Teil auf der Trägerrute 3 angeordnetes Fühlerelement 4 bzw. 4.1 etwa den vom entsprechenden Teil der Trägerrute 3 durchdrungenen Teil-Raumbereich erfasst.

Die Anzahl der auf der Trägerrute 3 angeordneten Fühlerelemente 4 richtet sich nach der erforderlichen Qualität der Mittelwertbildung sowie der totalen Länge der Trägerrute 3 oder dem total zu erfassenden Raumbereich. Für eine Mittelwertbildung in einem Luftkanal der Heizungs-, Lüftungs- und Klimatechnik ist eine genügende Qualität der Mittelwertbildung erreichbar, wenn auf der beispielhaft 1 m bis 10 m langen Trägerrute 3 etwa pro Meter ein Fühlerelement 4 bzw. 4.1 angeordnet wird und die Trägerrute 3 aus Kupfer ist.

Bei Bedarf werden die Trägerrute 3 und/oder das Fühlerelement 4 bzw. 4.1 mit der Hülse 7 durch einen Schrumpfschlauch elektrisch isoliert, wobei durch den Schrumpfschlauch auch ein guter Schutz gegen ein korrosives Fluid erreicht wird.

## Patentansprüche

1. Mittelwertbildende Einrichtung zum Messen einer Temperatur, **gekennzeichnet durch**
- eine Trägerrute (3) aus einem biegbaren und gut wärmeleitenden Material,
- ein mit der Trägerrute (3) thermisch gut gekoppeltes Fühlerelement (4; 4.1) zur Erfassung einer Temperatur, welche im Wesentlichen der mittels der Trägerrute (3) gemittelten Temperatur eines von der Trägerrute (3) durchdrungenen Raumbereichs entspricht und
- ein an der Trägerrute (3) im Bereich des Fühlerelements (4; 4.1) angeordnetes Versteifungselement (7; 30), **durch** welches ein Biegen der Trägerrute (3) im Bereich des Fühlerelements (4; 4.1) zum Schutz des Fühlerelements (4; 4.1) vor Biegespannungen wirksam verhinderbar ist.

2. Einrichtung nach Anspruch 1, **dadurch gekennzeichnet,**
**dass** das Versteifungselement durch eine auf der Trägerrute (3) angeordnete und mit der Trägerrute (3) thermisch gut gekoppelte Hülse (7) aus einem gut wärmeleitenden Material verwirklicht ist, und
- das Fühlerelement (4; 4.1) thermisch gut gekoppelte auf der Hülse (7) angeordnet ist.

3. Einrichtung nach Anspruch 2, **dadurch gekennzeichnet,**
**dass** die Hülse (7) eine Nut (13) aufweist, in der das Fühlerelement (4; 4.1) versenkt angeordnet ist.

4. Einrichtung nach einem vorangehenden Anspruch, **dadurch gekennzeichnet, dass** das Fühlerelement (4; 4.1) ein Schicht- oder Massewiderstand ist.

5. Einrichtung nach einem vorangehenden Anspruch, **dadurch gekennzeichnet, dass** auf der Trägerrute (3) mehrere, je ein Fühlerelement (4; 4.1) vor Biegespannungen schützende Versteifungselemente (7; 30) angeordnet sind, wobei die Fühlerelemente (4; 4.1) elektrisch miteinander verbunden sind.

6. Einrichtung nach einem vorangehenden Anspruch, **dadurch gekennzeichnet**, das Fühlerelement (4; 4.1) und das Versteifungselement (7; 30) mit einem Schmelzschlauch, Lack oder Schutzkleber umhüllt sind.

7. Einrichtung nach einem vorangehenden Anspruch, **gekennzeichnet durch** eine Abdeckung aus einem Schrumpfschlauch.

8. Einrichtung nach einem vorangehenden Anspruch, **dadurch gekennzeichnet, dass** die Trägerrute (3) spiral- oder schraubenlinienförmig gebogen ist.

9. Temperaturfühler für einen Luftkanal, nach einem der vorangehenden Ansprüche.

10. Temperaturfühler für eine Anlage der Heizungs-, Lüftungs- und Klimatechnik, nach einem der Ansprüche 1 bis 7.

## Claims

1. Averaging device for measuring a temperature, **characterised by**
- a support rod (3) made of a flexible material with good heat conducting properties,
- a sensor element (4; 4, 1) with good thermal coupling to the support rod (3) for detecting a temperature which essentially corresponds to the temperature averaged by means of the support rod of a spatial area through which the support rod (3) passes and
- a stiffening element (7; 30) arranged on the support rod (3) through which a bending of the support rod (3) in the area of the sensor element (4; 4, 1) is able to be effectively prevented to protect the sensor element (4; 4, 1) against bending stresses.

2. Device according to claim 1, **characterised in that**
the stiffening element is realised by a sleeve (7) made from a material with good thermal conductivity arranged on the support rod (3) and
- the sensor element (4; 4, 1) is arranged with good thermal coupling on the sleeve (7).

3. Device according to clam 2. **characterised in that**
the sleeve (7) features a groove (13) in which the sensor element (4; 4, 1) is arranged sunken.

4. Device according to one of the previous claims, **characterised in that** the sensor element (4; 4, 1) is a film resistor or a composition resistor

5. Device according to a previous claim, **characterised in that** a number of stiffening elements (7; 30), each protecting a sensor element (4; 4, 1) against bending stresses, are arranged on the support rod (3), with the sensor elements (4; 4; 1) being electrically connected to one another.

6. Device according to a previous claim, **characterised in that** the sensor element (4; 4. 1) and the stiffening element (7; 30) are enclosed within a shrink-wrap sleeve, lacquer or protective adhesive.

7. Device according to a previous claim, **characterised by** a cover made from heat-shrink tubing.

8. Device according to a previous claim, **characterised in that** the support rod (3) is bent in a spiral or helical form.

9. Temperature sensor for an air duct, according to one of the previous claims.

10. Temperature sensor for a heating, ventilation or air-conditioning system, according to one of claims 1 to 7.

## Revendications

1. Dispositif pour former une valeur moyenne pour la mesure d'une température, **caractérisé par**
- une canne porteuse (3) en un matériau souple et bon conducteur de la chaleur,
- un élément capteur (4; 4.1) thermiquement bien couplé à la canne porteuse (3) pour capter une température qui correspond essentiellement à la température, dont la moyenne est faite au moyen de la canne porteuse (3), d'une région spatiale pénétrée par la canne porteuse (3), et
- un élément raidisseur (7; 30) disposé sur la canne porteuse (3) dans la région de l'élément capteur (4; 4.1), grâce auquel un fléchissement de la canne porteuse (3) dans la région de l'élément capteur (4; 4.1) peut être empêché efficacement afin de protéger l'élément capteur (4; 4.1) contre des efforts de fluxion.

2. Dispositif selon la revendication 1, **caractérisé en ce que**
l'élément raidisseur est réalisé par une gaine (7) en un matériau bon conducteur de à chaleur, disposée sur à canne porteuse (3) et thermiquement bien couplée à la canne porteuse (3), et
- l'élément capteur (4; 4.1) est disposé sur la gaine (7) de façon à y être bien couplée thermiquement.

3. Dispositif selon la revendication 2, **caractérisé en ce que** la gaine (7) présente une rainure (13) dans laquelle l'élément capteur (4; 4.1) est disposé affleurant.

4. Dispositif selon une quelconque revendication précédente, **caractérisé en ce que** l'élément capteur (4; 4.1) est une résistance agglomérée ou à couche.

5. Dispositif selon une quelconque revendication précédente, **caractérisé en ce que** plusieurs éléments raidisseurs (7; 30) sont disposés sur la canne porteuse (3), chacun protégeant un. élément capteur (4; 4.1) contre des efforts de flexion, les éléments capteurs (4; 4.1) étant reliés électriquement les uns aux autres.

6. Dispositif selon une quelconque revendication précédente, **caractérisé en ce que** l'élément capteur (4; 4.1) et l'élément raidisseur (7; 30) sont enveloppés d'une gaine thermofusible, d'une laque ou d'un caoutchouc de protection.

7. Dispositif selon une quelconque revendication précédente, **caractérisé par** une couverture constituée d'une gaine thermorétractable.

8. Dispositif selon une quelconque revendication précédente, **caractérisé en ce que** la canne porteuse (3) est recourbée sous forme de spirale ou d'hélice.

9. Capteur de température pour une canalisation d'air selon l'une quelconque des revendications précédentes.

10. Capteur de température pour une installation de la technique du chauffage, de la ventilation et de la climatisation selon l'une quelconque des revendications 1 à 7.
